# EUROPEAN PATENT SPECIFICATION

(11) **EP 4 392 533 B1**
(45) Date of publication and mention of the grant of the patent: **26.02.2025**
(21) Application number: 22768744.9
(22) Date of filing: 23.08.2022
(51) Int. Cl.: C11D 3/22, C11D 17/04

(54) **FILMS AND CAPSULES**
FILME UND KAPSELN
FILMS ET CAPSULES

(30) Priority: 27.08.2021 EP 21193542
(43) Date of publication of application: 03.07.2024
(73) Proprietor: Unilever IP Holdings B.V., 3013 AL Rotterdam (NL); Unilever Global IP Limited, Wirral, Merseyside CH62 4ZD (GB)
(72) Inventor: JIMENEZ SOLOMON, Maria, Fernanda, 6708 WH Wageningen (NL); PARKER, Andrew, Philip, 6708 WH Wageningen (NL)
(74) Representative: Hardy, Susan Margaret
(86) International application number: PCT/EP2022/073416
(87) International publication number: WO 2023/025769

(56) References cited:
- EP-A1- 0 892 744
- EP-B1- 0 892 744
- US-A1- 2017 067 000
- US-A1- 2021 230 513
- US-B2- 7 807 194
- GEZGIN Z ET AL: "Nanoscale properties of biopolymer multilayers", FOOD HYDROCOLLOIDS, ELSEVIER BV, NL, vol. 63, 31 August 2016 (2016-08-31), pages 209 - 218, XP029811742, ISSN: 0268-005X, DOI: 10.1016/J.FOODHYD.2016.08.040

## Description

The present invention relates to capsules of water soluble film for containing homecare substrate treatment compositions.

Despite the prior art there remains a need for renewable films incorporating safety features whilst still having the necessary dissolution performance. This is especially important when the films are used to manufacture consumer water soluble capsules containing using with existing capsule processing technology. Water-soluble soluble films and corresponding methods of preparing capsules not according to the present invention are disclosed in patent document US 7807194 B2.

Accordingly, and in a first aspect, the invention provides a water soluble film comprising carrageenan and a bittering agent and a plasticiser present at a level from 1 - 99%wt, %wt based on total weight of dry film.

In a further aspect the invention provides a water-soluble capsule comprising a water-soluble film where film comprises carrageenan and a bittering agent.

The capsule preferably has at least one internal compartment enclosed by the water-soluble film, the compartment having an internal space and containing a home care composition within the internal space/

The applicant has surprisingly found that water soluble capsules made from films comprising carrageenan and a bittering agent provides improved dissolution. Further the dissolution performance means that capsules made from the film have performance and safety: the capsule dissolves quickly in the wash but remains safe so that it will not dissolve in a user's hands as they handle the capsule (whilst extracting from exterior packaging and place in a washing machine drum or other washing receptacle).

The following terms, as used here are defined below:
**"A"** and **"an",** are understood to mean one or more of what is claimed or described.
**"Alkyl"** refers to a straight or branched chain monovalent hydrocarbon radical having a specified number of carbon atoms. Alkyl groups may be unsubstituted or substituted with substituents that do not interfere with the specified function of the composition and may be substituted once or twice with the same or different group. Substituents may include alkoxy, hydroxy, mercapto, amino, alkyl substituted amino, nitro, carboxy, carbonyl, carbonyloxy, cyano, methylsulfonylamino, or halogen, for example. Examples of "alkyl" include, but are not limited to, methyl, ethyl, n-propyl, isopropyl, n-butyl, s-butyl, t-butyl, n-pentyl, n-hexyl, 3-methylpentyl, and the like.
**"Biodegradable"** means the complete breakdown of a substance by microorganisms to carbon dioxide water biomass, and inorganic materials.
**"Film"** refers to a water soluble material and may be be sheet-like material. The length and width of the material may far exceed the thickness of the material, however the film may be of any thickness.
**"Polymer"** refers to a macromolecule comprising repeat units where the macromolecule has a molecular weight of at least 1000 Daltons. The polymer may be a homopolymer, copolymer, terpoymer etc.
**"Substrate"** mean any suitable substrate including fabric articles or garments, bedding, towels etc., and dishes, where "dishes" is used herein in a generic sense, and encompasses essentially any items which may be found in a dishwashing load, including crockery chinaware, glassware, plasticware, hollowware and cutlery, including silverware. **"Thermoforming"** means a process in which the film is deformed by heat, and in particular it may involve the following: a first sheet of film is subjected to a moulding process to form an enclosure in the film e.g. forming a recess in the film. Preferably this involves heating prior to deformation. The deformation step is preferably enabled by laying the film over a cavity and applying a vacuum or an under pressure inside the cavity (to hold the film in the cavity). The recesses may then be filled. The process may then include overlaying a second sheet over the filled recesses and sealing it to the first sheet of film around the edges of the recesses to form a flat sealing web, thus forming a capsule which may be a unit dose product. The second film may be thermoformed during manufacture. Alternatively, the second film may not be thermoformed during manufacture.
**"Substrate treatment composition"** means any type of treatment composition for which it is desirable to provide a dose thereof in a water-soluble and is designed for treating a substrate as defined herein. Such compositions may include, but are not limited to, laundry cleaning compositions, fabric softening compositions, fabric enhancing compositions, fabric freshening compositions, laundry prewashing compositions, laundry pretreating compositions, laundry additives (e.g., rinse additives, wash additives, etc.), post-rinse fabric treatment compositions, dry cleaning compositions, ironing aid, dish washing compositions, hard surface cleaning compositions, and other suitable compositions that may be apparent to one skilled in the art in view of the teachings herein.
**"Unit dose"** means an amount of composition suitable to treat one load of laundry, such as, for example, from about 0.05 g to about 100 g, or from 10 g to about 60 g, or from about 20 g to about 40 g. A unit dose product may be in the form of a film package containing the composition, the package may be referred to as a capsule or pouch. **"Water-soluble"** means the article (film or package) dissolves in water at 20° C.

Unless otherwise noted, all component or composition levels are in reference to the active portion of that component or composition, and are exclusive of impurities, for example, residual solvents or by-products, which may be present in commercially available sources of such components or compositions.

Except in the examples and comparative experiments, or where otherwise explicitly indicated, all numbers are to be understood as modified by the word "about".

All percentages ( expressed as "%") and ratios contained herein are calculated by weight unless otherwise indicated. All conditions herein are at 20° C. and under the atmospheric pressure, unless otherwise specifically stated. All polymer molecular weights are determined by weight average molecular weight unless otherwise specifically noted. Numerical ranges expressed in the format "from x to y" are understood to include x and y. When for a specific feature multiple preferred ranges are described in the format "from x to y", it is understood that all ranges combining the different endpoints are also contemplated. In specifying any range of values or amounts, any particular upper value or amount can be associated with any particular lower value or amount.

### Carrageenan Film

The film comprises carrageenan.

Carrageenan is the generic name for a family of linear, sulphated galactans, obtained by extraction from a certain species of marine red algae (Rhodophyta). Carrageenans are composed of alternating 3-linkedb-D-galactopyranose (G-units) and 4-linkeda-D-galactopyranose (D-units) or 4-linked 3,6-anhydrogalactose (A-units), forming the disaccharide repeating unit of carrageenans (see Fig. 1). The sulfated galactans are classified according to the presence of the 3,6-anhydrogalactose on the 4-linked residue and the position and number of sulfate groups.

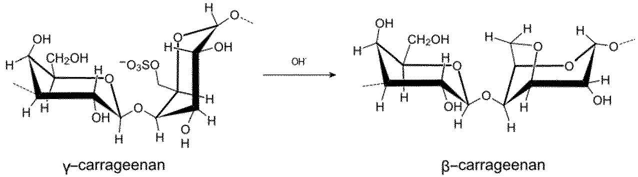

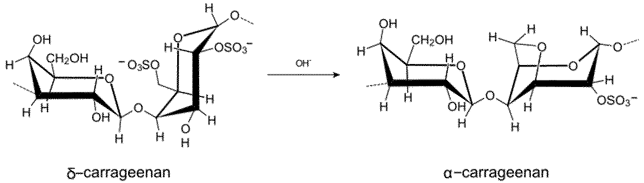

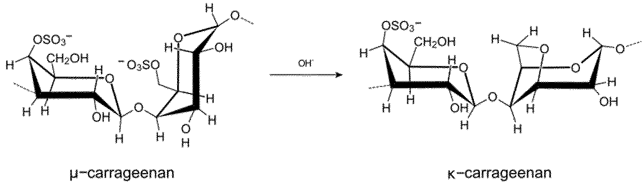

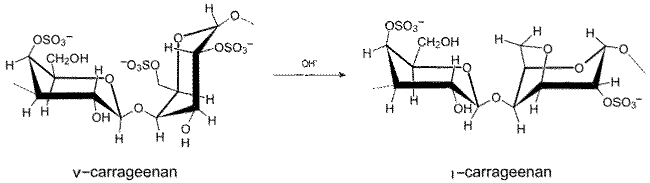

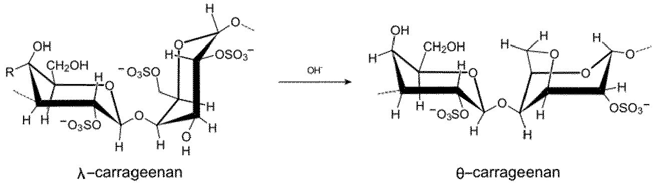

The carrageenan may in any of the above forms i.e. alpha (α)- , beta (β)- , Iota (i)- , Kappa (k)-, Lambda (λ)- , Mu (µ)-, Nu (v)- , gamma (γ)-, Delta (δ)- , or Theta (Θ)-carrageenan.

k-Carrageenan is predominantly obtained by extraction of the tropical seaweed Kappaphycus alvarezii, known in trade as Eucheuma cottonii(or simply cottonii) (Rudolph, 2000). Eucheuma denticulatum (trade name Eucheuma spinosumor simply spinosum) is the main species for the production of i-carrageenan. The sea-weeds are usually extracted with alkali at high temperatures to transform the biological precursors µ and v-carrageenans into commercial k- and i-carrageenans.

λ-carrageenan is obtained from different species of the Gigartina and Chondrus genera.

Preferably the film comprises at least 10%wt > 20%wt > 30%wt > 50%wt > 70%wt carrageenan (%wt based on total dry (cast) weight of the film). In other words, preferably, the film comprises at least 10%wt, more preferably at least 20%wt, even more preferably at least 30%wt, still more preferably at least 50%wt most preferably 70%wt carrageenan (%wt based on total dry (cast) weight of the film).

Preferably the film comprises less than 90%wt > 80%wt of carrageenan (%wt based on total dry (cast) weight of the film). In other words, preferably the film comprises less than 90%, more preferably less than 80%wt carrageenan(%wt based on total dry (cast) weight of the film).

### Lambda (λ) carrageenan

The film preferably comprises lambda (λ) carrageenan.

Preferably the film comprises at least 10%wt more preferably at least 20%wt even more preferably at least 30%wt still more preferably at least 50%wt most preferably at least 70%wt (λ) lambda (λ) carrageenan (%wt based on total dry (cast) weight of the film).

Alternatively the film comprises more than 10%wt preferably more than 20%wt even more preferably more than 30%wt still more preferably more than 50%wt most preferably more than 70%wt lambda (λ) carrageenan (%wt based on total dry (cast) weight of the film).

Preferably the film comprises no more than 60%wt more preferably no more than 70%wt even more preferably no more than 80%wt most preferably no more than 90%wt lambda (λ) carrageenan (%wt based on total dry (cast) weight of the film).

In embodiments, the lambda carrageenan may be present in the range 10-90%wt, preferably 20-85%wt., more preferably 40-80 %wt, most preferably 50 - 80 %wt (%wt based on total weight of the carrageenan present in the film).

Preferably the film excludes chitosan. Preferably the film excludes furecellan.

### PVOH

The film may comprise polyvinyl alcohol (PVOH). The PVOH may be present at a maximum level of 50%wt, preferably at maximum of 25%, (%wt based on total dry (cast) weight of the film).

Advantageously the film is substantially free of polyvinyl alcohol (PVOH) and more preferably less than 5%wt, even more preferably less than 1%wt and most preferably 0%wt, by weight of the composition.

### Bittering Agent

The bittering agent may be selected from: capsicinoids (including capsaicin); vanillyl ethyl ether; vanillyl propyl ether; vanillyl butyl ether; vanillin propylene; glycol acetal; ethylvanillin propylene glycol acetal; capsaicin; gingerol; 4-(1-menthoxymethyl)-2-(3'-methoxy-4'-hydroxy-phenyl)-1,3-dioxolane; pepper oil; pepperoleoresin; gingeroleoresin; nonylic acid vanillylamide; jamboo oleoresin; *Zanthoxylum piperitum* peel extract; sanshool; sanshoamide; black pepper extract; chavicine; piperine; spilanthol; and mixtures thereof.

Preferred bittering agents include pungents such as capsaicinoids, which
includes capsaicin, dihydrocapsaicin, nordihydrocapsaicin, homodihydrocapsaicin, homocapsaicin, and nonivamide. Other pungents which can act as bittering agents include pungents, piperine, allyl isothiocyanate, and resinferatoxin). A particularly preferred bittering agent is capsaicin.

Bittering agents may also be selected from denatonium salts such as denatonium benzoate, denatonium saccharide, denatonium chloride benzoic benzylamine amide, , trichloroanisole, methyl anthranilate and quinine (and salts of quinine).

Further examples of bittering agents include flavonoids such as quercefin and naringin, naringin, sucrose octaacetate, quassinoids such as quassin and brucine, and agents derived from plant or vegetable matter, such as chemical compounds derived from chilli pepper plants, those derived from a plant species of the genus cynaro, alkaloids and amino acids.

Preferably, the bittering agent is selected from the group consisting of denatonium benzoate (e.g. Bitrex^{®}), denatonium saccharide, quinine or a salt of quinine. The chemical name of denatonium is phenylmethyl-[2-[(2,6-dimethylphenyl)amino]-2-oxoethyl]-diethylammonium. In particular embodiments, the bittering agent is denatonium benzoate or denatonium saccharide.

The bittering agent may have a bitter value of between 1000 and 10,000,000 as measured using the standardized process is used that is set forth in the European Pharmacopoeia (5th Edition, Stuttgart 2005, Volume 1, General Monograph 15 Groups, 2.8.15 Bitterness Value, p. 278).

The bittering agent may be incorporated within the film or in a film-coating on the exterior surface of the film (prior to making the capsule) or water-soluble capsule. Preferably the bittering agent is incorporated into the film.

The bittering agent may be incorporated into the matrix of a water-soluble polymer included in the film by dissolving the bittering agent in a water-soluble polymer solution before the unprinted region of the film is formed. The bittering agent may be present in film material in a range of 100 to 5000 ppm, preferably 200 to 3000 ppm, more preferably 500 to 2000 ppm, based on the weights of the bittering agent and film. For example, 1 mg of bittering agent may be incorporated into 1 g of film to provide the bittering agent at 1000 ppm.

Additionally or alternatively, the bitter agent may be included in the water-soluble package as a powdered bittering agent in a powder coating applied to the exterior surface of the water-soluble package (described in more detail below)

Preferably, the water-soluble package includes a powder coating on an exterior surface of the film, and the powder coating includes a powdered lubricating agent. The powder coating, when present, may coat printed region or regions and/or unprinted region or regions (if present) of the film. In any printed regions of the film, the powder coating may be indirectly on the exterior surface of the film where there is a layer of dye or pigment. The powder coating may be applied to least 50%, preferably at least 60%, at least 70% even more preferably at least 80%, most preferably at least 90%percent by area of the exterior surface of the film. The powder coating can be applied by any known technique such as spray-coating or passing the film through a falling curtain of powder coating composition. The powder coating may be applied to the exterior surface of the film at a rate of 0.5 to 10mg per 100cm², in some embodiments not more than 5mg per 100cm², and in further embodiments in the range of 1.25 to 2.5mg per 100cm². The powder coating may be applied to or present on the exterior surface of the film in an amount of 100 ppm or more, preferably 200 ppm or more, more preferably 300 ppm or more, based on the weights of the powder coating and the film. For example, a 1 mg of powder coating may be applied to a 1 g film to provide a 1000 ppm coating on the substrate. In certain embodiments, the powder coating is applied to or present on the exterior surface of the film in a range of 100 to 5000 ppm, preferably 200 to 3000 ppm, more preferably 300 to 2000 ppm.

### Lubricating Agent

The powder coating may include a powdered lubricating agent. Typical powdered lubricating agents include oligosaccharide, polysaccharide and inorganic lubricating agents. The powdered coating may include one or more of the group selected from starch, modified starches (including, but limited to, corn starch, potato starch or hydroxyethyl starch) silicas, siloxanes, calcium carbonate, magnesium carbonate, clay, talc, silicic acid, kaolin, gypsum, zeolites, cyclodextrins, calcium stearate, zinc stearate, alumina, magnesium stearate, sodium sulphate, sodium citrate, sodium tripolyphosphate, potassium sulphate, potassium citrate, potassium tripolyphosphate and zinc oxide. In a preferred embodiment, the powdered lubricating agent includes talc.

**The powder coating can include a bittering agent** in addition to or as an alternative to a bittering agent being present within or film-coated on the film. The powdered bittering agent may be a powdered form of any one of the bittering agents described herein. When a bittering agent is included in a powder coating, the powdered bittering agent may form 5 weight percent or more of the powder coating based on the total weight of the powder coating. In some embodiments, the powdered bittering agent forms 10 weight percent or more, 15 weight percent or more, 20 weight percent or more, or 25 weight percent or more of powder coating based on the total weight of the powder coating. In some embodiments, the powdered bittering agent forms 75 weight percent or less, 70 weight percent or less, 65 weight percent or less, 60 weight percent or less, or 55 weight percent or less of the powder coating based on the total weight of the powder coating. In further embodiments, the powdered bittering agent forms 5 to 75 weight percent, 10 to 70 weight percent, 15 to 65 weight percent, 20 to 60 weight percent, or 25 to 55 weight percent of the powder coating based on the total weight of the powder coating. In alternative embodiments, the powdered bittering agent forms 50 weight percent or less, 40 weight percent or less, 30 weight percent or less of the powder coating based on the total weight of the powder coating. In these embodiments, it is advantageous to include a relatively low amount of powdered bittering agent in the powder coating while maintaining a bitter taste when a user tries to ingest the water-soluble package.

The powdered bittering agent, when present, may have an average particle diameter of at least about 0.1 microns. The powdered bittering agent may have an average particle diameter of about 200 microns or less. In some embodiments, the powdered bittering agent has an average particle diameter of in the range of about 0.1 to 100 microns, in other embodiments in the range of about 0.1 to 20 microns and in further embodiments in a range of about 5 and 15 microns. Average particle diameter can be measured by known optical imaging techniques.

In some embodiments, the powder coating further includes one or more additional active agents. The additional active agent may be selected from one or more of the group of enzymes, oils, odour absorbers, fragrances, bleaches, bleach components, cleaning polymers, soil release polymers, EPEl, water softeners, dyes and fabric softeners.

### Additives

The water-soluble film can contain other auxiliary agents and processing agents, such as, but not limited to, plasticizers, plasticizer compatibilizers, surfactants, lubricants, release agents, fillers, extenders, cross-linking agents, antiblocidng agents, antioxidants, detackifying agents, antifoams, nanoparticles such as layered silicate-type nanoclays (e.g., sodium montmorillonite), bleaching agents (e.g., sodium metabisulfite, sodium bisulfite or others), and other functional ingredients, in amounts suitable for their intended purposes. Embodiments incluifing plasticizers are preferred. In embodiments, the water-soluble film includes a surfactant, an antioxidant, a bittering agent, a soil release polymer, an anti-redeposition aid, a chelant, a builder, a perfume, or combinations thereof. The amount of auxiliary agents can be up to about 50 wt. %, 20 wt %, 15 wt %, 10 wt %, 5 wt. %, 4 wt % and/or at least 0.01 wt. %, 0.1 wt %, 1 wt %, or 5 wt %, individually or collectively.

### Plasticisers

A plasticizer is a liquid, solid, or semi-solid that is added to a material (usually a resin or elastomer) making that material softer, more flexible (by decreasing the glass-transition temperature of the polymer), and easier to process. A polymer can alternatively be internally plasticized by chemically modifying the polymer or monomer. In addition, or in the alternative, a polymer can be externally plasticized by the addition of a suitable plasticizing agent. Water is recognized as a very efficient plasticizer for PVOH and other polymers; including but not limited to water soluble polymers, however, the volatility of water makes its utility limited since polymer films need to have at least some resistance (robustness) to a variety of ambient conditions including low and high relative humidity. The plasticizer can include, but is not limited to, glycerin, diglycerin, sorbitol, ethylene glycol, diethylene glycol, triethylene glycol, dipropylene glycol, tetraethylene glycol, propylene glycol, polyethylene glycols up to 400 MW, neopentyl glycol, trimethylolpropane, poly ether polyols, sorbitol, 2-methyl- 1,3 -propanediol (MPDiol(R)), ethanolamines, and a mixture thereof. A preferred plasticizer is glycerin, sorbitol, triethyleneglycol, propylene glycol, dipropylene glycol, 2-methyl- 1,3 -propanediol, trimethylolpropane, or a combination thereof.

The total amount of the non-water plasticizer can be in a range of about 10 weight percent to about 40 weight percent, or about 15 weight percent to about 35 weight percent, or about 20 weight percent to about 30 weight percent, for example about 25 weight percent, based on total film weight. Combinations of glycerin, dipropylene glycol, and sorbitol can be used. Optionally, glycerin can be used in an amount of about 5 wt percent to about 30 wt percent, or 5 wt percent to about 20 wt percent, e.g., about 13 wt percent. Optionally, dipropylene glycol can be used in an amount of about 1 weight percent to about 20 weight percent, or about 3 weight percent to about 10 weight percent, for example 6 weight percent. Optionally, sorbitol can be used in an amount of about 1 wt percent to about 20 wt percent, or about 2 wt percent to about 10 wt percent, e.g., about 5 wt percent. The specific amounts of plasticizers can be selected in a particular embodiment based on desired film flexibility and processability features of the water-soluble film. At low plasticizer levels, films may become brittle, difficult to process, or prone to breaking. At elevated plasticizer levels, films may be too soft, weak, or difficult to process for a desired use.

In some embodiments the plasticizer can include glycerin, sorbitol, and trimethyloyl propane. Optionally, the plasticizer can be included in an amount greater than or equal to 30 phr, or greater than 40 phr, for example in a range of about 30 phr to about 75 phr, about 30 phr to about 70 phr, about 30 phr to about 60 phr, about 30 phr to about 50 phr, or about 30 phr to about 45 phr.

In some embodiments, the plasticizer can include glycerin, sorbitol, and 2-methyl-1,3- propanediol. Optionally the plasticizer can be included in an amount less than 30 phr or less than 25 phr, for example in a range of about 5 phr to about 30 phr, about 10 phr to about 30 phr, about 15 phr to about 30 phr, about 5 phr to about 29 phr, about 5 phr to about 25 phr, about 10 phr to about 25 phr, or about 15 phr to about 25 phr.

The plasticizer preferably comprises a polyol.

Preferred plasticizers include glycerol, diglycerol, sorbitol, ethylene glycol, diethylene glycol, triethylene glycol, dipropylene glycol, tetraethylene glycol, propylene glycol, polyethylene glycols up to 400 MW, neopentyl glycol, trimethylolpropane, poly ether polyols, sorbitol, 2-methyl- 1,3 -propanediol (MPDiol(R)), ethanolamines, and a mixture thereof.

Preferably, the polyol comprises glycerol or a sugar alcohol e.g. sorbitol or a polymeric polyol up to 400 MW, such as PEG 400 or any mixture thereof. The inventors have found that when glycerol, D-Sorbitol and PEG 400 are combined with carrageenan film, no additional plasticizers are needed, i.e. these can all be used alone, as single, sole plasticizers.

Preferably the film comprises a single plasticiser, being a polyol.

Preferably the polyol comprises a polyol having a low weight average molecular weight.

Preferably the polyol has a weight average molecular weight of no more than 400 Daltons, more preferably no more than 300 Daltons, more preferably no more than 200 Daltons, more preferably no more than 100 Daltons.

The polyol may comprise a diol or a triol or a tetrol, that is to say it may comprise one or two or three hydroxyl groups.

The polyol may comprise a monomeric or a polymeric polyol.

Exemplary plasticizers can include glycerol, diglycerol, sorbitol, ethylene glycol, diethylene glycol, triethylene glycol, dipropylene glycol, tetraethylene glycol, propylene glycol, polyethylene glycols having a molecular weight no more than ( up to) 400 MW (weight average molecular weight), neopentyl glycol, trimethylolpropane, poly ether polyols, sorbitol, 2-methyl- 1,3 -propanediol (MPDiol(R)), ethanolamines, and a mixture thereof.

The plasticizer preferably excludes MHPC (methylhydroxypropyl).

The plasticizer preferably excludes gums e.g. locust bean gum.

The plasticizer preferably excludes polyvinyl alcohol (PVOH) plasticisers such as Mowiol^{®}.

Preferably, the polyol comprises glycerol. Glycerol provides high elongation.

Preferably, the polyol comprises sorbitol.

Preferably the polyol comprises a polymeric polyol up to 400 weight average molecular weight (MW), such as polyethylene glycol (PEG) 400.

Multiple plasticisers can be included but preferably the film comprises a single plasticiser, being a polyol. The inventors have found that when any of glycerol, D-Sorbitol and PEG 400 are combined with carrageenan film, no additional plasticizers are needed, i.e. these can all be used alone, as single, sole plasticizers.

In the case of films comprising Iota or lamda carrageenan, preferably the plasticizer is a glycerol or PEG or D-sorbitol preferably PEG 400.

For Iota carrageenan films requiring high elongation, glycerol is highly preferred.

For lambda carrageenan Films requiring high elongation values Glycerol or PEG, preferably PEG-400 are preferred.

Preferably the film comprises from 5 - 95%wt plasticiser based on total weight of dry e.g cast film.

Preferably the plasticiser e.g. polyol (single or blend) is present in the film at 20-80%wt, more preferably 40- 60%wt of film, most preferably 50%wt, based on total dry wt. of the film. This is advantageous as stretchability (ultimate strain) means that the film can be stretched across deep recesses. At these levels, the films are also sufficiently strong to enable capsule formation with the film remaining intact.

### Film Thickness

The film e.g. capsule film may have a thickness (before incorporation into a product e.g. capsule) from 40 to 200 micrometres (microns), preferably from 40 to 150 micrometres (microns), more preferably from 40 to 100 micrometres (microns), even more preferably from 60 to 90 micrometres (microns), most preferably from 70 to 80 micrometres (microns).

In embodiments, the film may have a thickness (before incorporation into a product e.g. capsule) from 151 - 200 micrometre, preferably from 160 - 200, more preferably from 170 - 200 micrometre.

Water-soluble capsules may be made using two films, e.g one (second) film superposed over another (first) film and sealed around edge regions e.g. as described herein. Where two films are used to make a capsule, the second film is typically of a similar type to that used for the first film, but slightly thinner. Thus, in embodiments, the second film is thinner than the first film. In embodiments the ratio of thickness of the first film to the thickness of the second film is from 1:1 to 2:1.

In embodiments the first film thickness (pre-thermoforming) is from 40 to 200 micrometres, from 40 to 150 micrometres, from 60 to 120 micrometres, or from 80 to 100 micrometres. After capsule manufacture generally the average thickness of the first film will be from 30 to 90 micrometres, or from 40 to 80 micrometres.

In embodiments the second film thickness (pre-thermoforming) is from 20 to
100 micrometres, from 25 to 80 micrometres, or from 30 to 60 micrometres.

### Layer

Preferably the film comprises a single layer, that is to say it comprises no more than one layer. One way this may be achieved is that the film is made by forming a solution of carrageenan with a solvent e.g. water and any other ingredients (plasticisers, bittering agent as examples) and this is then cast e.g. poured on to a surface such as a moving belt and then dried. No further layers of the film are added by casting.

### Production

The capsules may be formed in any suitable manner using the water-soluble carrageenan film.

The film may comprise sheet film.

The film may be folded and/or sealed to create the at least one internal compartment with and internal space which can then be filled with a home care composition. Optionally the compartment is then closed by sealing the film e.g. around the periphery of the capsule.

Alternatively the water soluble capsule may comprising a first film comprising a thermoformed recess, said recess containing a substrate treatment composition and a second film superposed over said first film, said first and second films sealed around the edges, wherein said first and second films are according to the first aspect of the invention and any preferred/optional features as described herein.

Packages comprising a film such as those described herein may be manufactured using a form fill seal approach or using a vacuum form, fill seal approach. Pouches may be formed on a continuously moving process where a film is drawn into a mould, filled from above and then sealed by application of a second film. The pouches are then separated from one another to form individual unit dose products.

Substrate treatment capsules e.g. laundry capsules maybe thermoformed which involves a moulding process to deform sheet film to provide recesses therein. The process involves heating sheet film to soften and deform the film to stretch and fill a cavity in a mould and also the application of vacuum. The recesses are filled and the capsules completed by overlaying a second sheet of film over the filled recesses and sealing it to the first sheet of film around the edges of the recesse to form a flat seal. Relaxation of the first film typically then causes the applied second sheet to bulge out when the vacuum is released from the first sheet of film in the mould. For high performance laundry or machine dish wash treatment capsules there is a need to fill the capsule with sufficient liquid. The fill volume results in a greater stretch imposed on the water-soluble and provides a capsule with a bulbous, convex outer profile as the first and second sheets bulge out and stretch under the pressure. Films need to be strong and sufficiently stretchy to allow for this process. Films according to the invention are advanatageous for thermoforming such capsules as they exhibit strength and stretch.

The two films may be heat or water sealed depending on the process machinery used. The capsule may be sealed using a sealing solution which may comprise an aqueous solution e.g. polysaccharide glue. The glue preferably comprises dextran, cellulose derivatives, gums e.g. locust bean gum, or starch or starch derivatives. The film surface may be treated to provide an adhesion surface e.g. microperforations, abrasions, or acidification of the surface to provide acid-esterified carrageenan.

The water-soluble packages of the present invention can be manufactured using standard known techniques. The film may be printed, for example, a sheet of film (e.g. film) may be printed with one or more layers of dye or pigment in a pattern. The pattern may be indicia, such as words, symbols or drawings. The layer or layers of dye or pigment may be printed onto the film using an ink. The ink type is not particularly limited, and includes non-aqueous solvent- based inks (such as organic solvent-based inks), aqueous-based inks and/or UV cured inks. In some embodiments, the ink is a non-aqueous-based ink. The film may be printed with a primer layer before printing of the layer or layers of dye or pigment. After printing with the layer or layers of dye or pigment, the film may be printed with a protective or lacquer layer. The printed layer or layers may be then dried, for example using heat and/or air flow. The resulting printed film may be stored, transported or used immediately to form the printed water-soluble packages
as described herein.

The area of print may be achieved using standard techniques, such as flexographic printing or inkjet printing. Preferably, the area of print is achieved via flexographic printing, in which a film is printed, then moulded into the shape of an open compartment. This compartment is then filled with a detergent composition and a second film placed over the compartment and sealed to the first film. The area of print may be on either side of the film.

When the bittering agent is contained within at least part of the film, the bittering agent is typically present in the film before printing. In one embodiment, the bittering agent is included at least on part of the exterior surface of the film as a film coating. The film coating of bittering agent may be deposited on the water-substrate before, during or after the printing of the printed regions.

The film is typically formed (preferably thermoformed) into a film enclosure (e.g. a film pocket, open capsule or container). The film enclosure may then be filled with a composition such as a dishwashing or laundry detergent composition. The water-soluble enclosure containing the composition or material can then be sealed, for example by sealing the edges of the enclosure or joining the enclosure with one or more additional pieces of film, in order to enclose the material or composition in the water-soluble package. The powder coating may then be applied to the exterior surface of the film. The powder coating may be applied to the film by any known powder technique. Preferably, the powder is applied to the film using no solvent or a non-aqueous solvent. Such an application reduces the risk of dissolving the film. The above optional and preferred features are equally combinable and applicable to all aspects of the invention, unless indicated otherwise.

In a particular embodiment, the present invention provides a printed water-soluble package comprising a film of the first aspect, the film enclosing a composition, the film having an exterior surface with one or more printed regions, the bittering agent is selected from the group consisting of denatonium benzoate, denatonium saccharide, quinine or a salt of quinine and is substantially homogenously contained within the film, and wherein the water-soluble package further includes a powder coating coated on the exterior surface of the film, the powder coating a including a powdered lubricating agent, the powdered lubricating agent being talc.

### Liquid Laundry Detergent Composition

The substrate composition may be in the form of a solid, a liquid, a dispersion, a gel, a paste, a fluid or a mixture thereof. The capsule preferably comprises a liquid composition.

Non-limiting examples of compositions include cleaning compositions, fabric care compositions, automatic dishwashing compositions and hard surface cleaners. More particularly, the compositions may be a laundry, fabric care or dish washing composition including, pre-treatment or soaking compositions and other rinse additive compositions. The laundry detergent composition may be used during the main wash process or could be used as pre-treatment or soaking compositions.

The water-soluble capsule preferably comprises a laundry detergent composition. The liquid composition may be opaque, transparent or translucent.

The or each compartment may comprise the same or a different composition. , however, it may also comprise different compositions in different compartments. The composition may be any suitable composition.

Laundry detergent compositions include fabric detergents, fabric softeners, 2-in-1 detergent and softening, pre-treatment compositions and the like. Laundry detergent compositions may comprise surfactants, builders, chelating agents, dye transfer inhibiting agents, dispersants, enzymes, and enzyme stabilizers, catalytic materials, bleach activators, polymeric dispersing agents, clay soil removal/anti-redeposition agents, brighteners, suds suppressors, dyes, additional perfume and perfume delivery systems, structure elasticizing agents, fabric softeners, carriers, hydrotropes, processing aids and/or pigments and mixtures thereof. The composition may be a laundry detergent composition comprising an ingredient selected from the group comprising a shading dye, surfactant, polymers, perfumes, encapsulated perfume materials, structurant and mixtures thereof.

The liquid laundry detergent composition may comprise an ingredient selected from, bleach, bleach catalyst, dye, hueing dye, cleaning polymers including alkoxylated polyamines and polyethyleneimines, soil release polymer, surfactant, solvent, dye transfer inhibitors, chelant, enzyme, perfume, encapsulated perfume, polycarboxylates, structurant and mixtures thereof.

Surfactants can be selected from anionic, cationic, zwitterionic, non-ionic, amphoteric or mixtures thereof. Preferably, the fabric care composition comprises anionic, non-ionic or mixtures thereof.

The anionic surfactant may be selected from linear alkyl benzene sulfonate, alkyl ethoxylate sulphate and combinations thereof.

Suitable anionic surfactants useful herein can comprise any of the conventional anionic surfactant types typically used in liquid detergent products. These include the alkyl benzene sulfonic acids and their salts as well as alkoxylated or non-alkoxylated alkyl sulfate materials.

Suitable nonionic surfactants for use herein include the alcohol alkoxylate nonionic surfactants. Alcohol alkoxylates are materials which correspond to the general formula: R¹(CₘH₂ₘO)ₙOH wherein R¹ is a C₈-C₁₆ alkyl group, m is from 2 to 4, and n ranges from about 2 to 12. In one aspect, R¹ is an alkyl group, which may be primary or secondary, that comprises from about 9 to 15 carbon atoms, or from about 10 to 14 carbon atoms. In one aspect, the alkoxylated fatty alcohols will also be ethoxylated materials that contain on average from about 2 to 12 ethylene oxide moieties per molecule, or from about 3 to 10 ethylene oxide moieties per molecule.

The shading dyes employed in the present laundry detergent compositions may comprise polymeric or non-polymeric dyes, pigments, or mixtures thereof. Preferably the shading dye comprises a polymeric dye, comprising a chromophore constituent and a polymeric constituent. The chromophore constituent is characterized in that it absorbs light in the wavelength range of blue, red, violet, purple, or combinations thereof upon exposure to light. In one aspect, the chromophore constituent exhibits an absorbance spectrum maximum from about 520 nanometers to about 640 nanometers in water and/or methanol, and in another aspect, from about 560 nanometers to about 610 nanometers in water and/or methanol.

Although any suitable chromophore may be used, the dye chromophore is preferably selected from benzodifuranes, methine, triphenylmethanes, napthalimides, pyrazole, napthoquinone, anthraquinone, azo, oxazine, azine, xanthene, triphenodioxazine and phthalocyanine dye chromophores. Mono and di-azo dye chromophores are preferred. The shading dye may comprise a dye polymer comprising a chromophore covalently bound to one or more of at least three consecutive repeat units. It should be understood that the repeat units themselves do not need to comprise a chromophore. The dye polymer may comprise at least 5, or at least 10, or even at least 20 consecutive repeat units.

The repeat unit can be derived from an organic ester such as phenyl dicarboxylate in combination with an oxyalkyleneoxy and a polyoxyalkyleneoxy. Repeat units can be derived from alkenes, epoxides, aziridine, carbohydrate including the units that comprise modified celluloses such as hydroxyalkylcellulose; hydroxypropyl cellulose; hydroxypropyl methylcellulose; hydroxybutyl cellulose; and, hydroxybutyl methylcellulose or mixtures thereof. The repeat units may be derived from alkenes, or epoxides or mixtures thereof. The repeat units may be C2-C4 alkyleneoxy groups, sometimes called alkoxy groups, preferably derived from C2-C4 alkylene oxide. The repeat units may be C2-C4 alkoxy groups, preferably ethoxy groups.

For the purposes of the present invention, the at least three consecutive repeat units form a polymeric constituent. The polymeric constituent may be covalently bound to the chromophore group, directly or indirectly via a linking group. Examples of suitable polymeric constituents include polyoxyalkylene chains having multiple repeating units. In one aspect, the polymeric constituents include polyoxyalkylene chains having from 2 to about 30 repeating units, from 2 to about 20 repeating units, from 2 to about 10 repeating units or even from about 3 or 4 to about 6 repeating units. Non-limiting examples of polyoxyalkylene chains include ethylene oxide, propylene oxide, glycidol oxide, butylene oxide and mixtures thereof.

The dye may be introduced into the detergent composition in the form of the unpurified mixture that is the direct result of an organic synthesis route. In addition to the dye polymer therefore, there may also be present minor amounts of un-reacted starting materials, products of side reactions and mixtures of the dye polymers comprising different chain lengths of the repeating units, as would be expected to result from any polymerisation step.

The compositions can comprise one or more detergent enzymes which provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, beta -glucanases, arabinosidases, hyaluronidase, chondroitinase, laccase, and amylases, or mixtures thereof. A typical combination is a cocktail of conventional applicable enzymes like protease, lipase, cutinase and/or cellulase in conjunction with amylase.

The laundry detergent compositions of the present invention may comprise one or more bleaching agents. Suitable bleaching agents other than bleaching catalysts include photobleaches, bleach activators, hydrogen peroxide, sources of hydrogen peroxide, preformed peracids and mixtures thereof. In general, when a bleaching agent is used, the compositions of the present invention may comprise from about 0.1 percent to about 50 percent or even from about 0.1 percent to about 25 percent bleaching agent by weight of the subject cleaning composition.

The composition may comprise a brightener. Suitable brighteners are stilbenes, such as brightener 15. Other suitable brighteners are hydrophobic brighteners, and brightener 49. The brightener may be in micronized particulate form, having a weight average particle size in the range of from 3 to 30 micrometers, or from 3 micrometers to 20 micrometers, or from 3 to 10 micrometers. The brightener can be alpha or beta crystalline form.

The compositions herein may also optionally contain one or more copper, iron and/or manganese chelating agents. If utilized, chelating agents will generally comprise from about 0.1 percent by weight of the compositions herein to about 15 percent, or even from about 3.0 percent to about 15 percent by weight of the compositions herein.

The composition may comprise a calcium carbonate crystal growth inhibitor, such as one selected from the group consisting of: 1-hydroxyethanediphosphonic acid (HEDP) and salts thereof; N,N-dicarboxymethyl-2-aminopentane-1,5-dioic acid and salts thereof; 2-phosphonobutane-1,2,4-tricarboxylic acid and salts thereof; and any combination thereof.

The compositions of the present invention may also include one or more dye transfer inhibiting agents. Suitable polymeric dye transfer inhibiting agents include, but are not limited to, polyvinylpyrrolidone polymers, polyamine N-oxide polymers, copolymers of N-vinylpyrrolidone and N-vinylimidazole, polyvinyloxazolidones and polyvinylimidazoles or mixtures thereof. When present in the compositions herein, the dye transfer inhibiting agents are present at levels from about 0.0001 percent, from about 0.01 percent, from about 0.05 percent by weight of the cleaning compositions to about 10 percent, about 2 percent, or even about 1 percent by weight of the cleaning compositions.

The laundry detergent composition may comprise one or more polymers. Suitable polymers include carboxylate polymers, polyethylene glycol polymers, polyester soil release polymers such as terephthalate polymers, amine polymers, cellulosic polymers, dye transfer inhibition polymers, dye lock polymers such as a condensation oligomer produced by condensation of imidazole and epichlorhydrin, optionally in ratio of 1:4:1, hexamethylenediamine derivative polymers, and any combination thereof.

Other suitable cellulosic polymers may have a degree of substitution (DS) of from 0.01 to 0.99 and a degree of blockiness (DB) such that either DS+DB is of at least 1.00 or DB+2DS-DS² is at least 1.20. The substituted cellulosic polymer can have a degree of substitution (DS) of at least 0.55. The substituted cellulosic polymer can have a degree of blockiness (DB) of at least 0.35. The substituted cellulosic polymer can have a DS+DB, of from 1.05 to 2.00. A suitable substituted cellulosic polymer is carboxymethylcellulose. Another suitable cellulosic polymer is cationically modified hydroxyethyl cellulose. Suitable perfumes include perfume microcapsules, polymer assisted perfume delivery systems including Schiff base perfume/polymer complexes, starch-encapsulated perfume accords, perfume-loaded zeolites, blooming perfume accords, and any combination thereof. A suitable perfume microcapsule is melamine formaldehyde based, typically comprising perfume that is encapsulated by a shell comprising melamine formaldehyde. It may be highly suitable for such perfume microcapsules to comprise cationic and/or cationic precursor material in the shell, such as polyvinyl formamide (PVF) and/or cationically modified hydroxyethyl cellulose (catHEC).

Suitable suds suppressors include silicone and/or fatty acid such as stearic acid.

The liquid laundry detergent composition maybe coloured. The colour of the liquid laundry detergent composition may be the same or different to any printed area on the film of the article. Each compartment of the unit dose article may have a different colour. Preferably, the liquid laundry detergent composition comprises a non-substantive dye having an average degree of alkoxylation of at least 16.

At least one compartment of the unit dose article may comprise a solid. If present, the solid may be present at a concentration of at least 5 percent by weight of the unit dose article.

The second water-soluble film may comprise at least one open or closed compartment. In one embodiment, a first web of open pouches is combined with a second web of closed pouches preferably wherein the first and second webs are brought together and sealed together via a suitable means, and preferably wherein the second web is a rotating drum set-up. In such a set-up, pouches are filled at the top of the drum and preferably sealed afterwards with a layer of film, the closed pouches come down to meet the first web of pouches, preferably open pouches, formed preferably on a horizontal forming surface. It has been found especially suitable to place the rotating drum unit above the horizontal forming surface unit.

Preferably, the resultant web of closed pouches are cut to produce individual unit dose articles.

Those skilled in the art would recognize the appropriate size of mould needed in order to make a unit dose article according to the present invention.

When carrying or containing a substrate treatment composition, this may be a laundry treatment composition such as a laundry liquid or powder composition. Such formulations are well known in the art and comprise water up to around 15% wt. of the composition; surfactants such as anionic surfactants, non-ionic surfactants, zwitterionic surfactants and mixtures thereof. Further, polymeric cleaning aids such as soil release polymers and polyamines are commonly employed to improve cleaning performance. Fragrances are added for providing a fragrance benefit to the fabric after treatment.

Visual cues such as dyes are used to provide improved aesthetics.

### Examples

Exemplary films were made with Carrageenan with and without Bitrex^{®}, and varying types of plasticiser as in the **Table 1** below:

**Table 1: Film Compositions**

| **CGN Film code** | **CGN** | | **Plasticiser** | | **Bitrex^{®}** |
|---|---|---|---|---|---|
| | **Type** | **Level (wt%)** | **Type** | **Level (wt%)** | **Level (wt%)** |
| **50:50 (Lambda CS50* CGN: Glycerol)** | **Lambda CS50** | **50** | **Glycerol** | **50** | **0** |
| **50:50 Bitrex^{®}(Lambda CS50 CGN: Glycerol)** | | | | | **0.1** |

| | | | | | |
|---|---|---|---|---|---|
| The films containing Bitrex^{®} have 1000ppm (0.1wt%) of Bitrex^{®} in the dry film (1mg of Bitrex^{®} /g of film). Bitrex^{®} is denatonium benzoate *Lambda Carrageenan CS50 ex Cargill. | | | | | |

### Method for making the Carrageenan film compositions of example 1.

### Preparation of polymer solutions to cast films of Table 1

1. Film components were mixed with water to provide a casting solution in a ratio of 7.5 %wt. film to 92.5% wt. water as follows.
2. Carrageenan was dissolved in hot water (70-80C) with overhead stirrer (added gradually) then left for approx. 5-10 minutes to dissolve and plasticiser (glycerol, PEG400 or D-sorbitol) added - in ratios according to the table. For 100g of film casting solution made at a concentration of 7.5%wt solids, we add 7.5mg of Bitrex^{®}.
3. The solution was left to stir for approximately 15 minutes until full dissolution and mixing, ensuring the stirrer was fully immersed to avoid formation of bubbles.
4. The mixture was then centrifuged for 20minutes at 2800rpm at 30C to degas and remove bubbles.
5. The total solution weighed 100g and is sufficient to cast a film the size of an A4 sheet. The casting solution should be at 40C when casting the films.

### Casting

1. Films were cast on to a teflon substrate using a Elcometer 4340 Motorised / Automatic Film Applicator and Elcometer 3570 Micrometric Film Applicators.
2. The casting knife was set at different thickness (for clarity this is the thickness of the cast solution or wet film, before the film has set and water evaporated from the solution).
3. The optimum casting thickness for an 7.5wt% casting solutions is 2000µm to give a dry film thickness of 85µm. Thicknesses were varied.
4. Casting speed 2 (1m per minute) was used and this advantageously reduces bubbles.
5. Any bubbles observed can be popped e.g. with a sharp spatula.
6. The films were dried in ambient laboratory conditions for 12 - 48 hours (the time depends on ambient conditions) and then tested for peeling from the substrate. For increased drying speed, films can be dried in an oven at 50°C for 3hours.F

### Film Dissolution Tests

Film pieces were cut to the size 4cm x 2.5cm were dissolved in 150mL of demineralised water at 40°C in a 250mL beaker stirring at 150 rpm and recorded time until total film dissolution.

The results are shown in Table 2. These that the bittering agent Bitrex^{®} makes the film dissolve faster (evidenced by the reduced dissolution time) and this effect is seen in both deionised and hard (Prenton) water.

| **Film** | **CGN** | | **Plasticiser** | | **Bitrex^{®}** | **Dissolution Temp (°C)** | **Water type** | **Average dissolution time (s)** | **SD (S)** |
|---|---|---|---|---|---|---|---|---|---|
| | **Type** | **Level (wt%)** | **Type** | **Level (wt%)** | **Level (wt%)** | | | | |
| **50:50 (Lambda CS50 CGN: Glycerol)** | **Lambd a CS50** | **50** | **Glycerol** | **50** | **0** | 40 | Prenton * | 736.3 | 95.3 |
| | | | | | | 30 | | 816.7 | 119.9 |
| | | | | | | 40 | Deionis ed | 503.7 | 69.6 |
| | | | | | | 30 | | 425.3 | 11.7 |
| **50:50 Bitrex^{®} (Lambda CS50 CGN: Glycerol)** | | | | | **0.1** | 40 | Prenton | 503.0 | 36.8 |
| | | | | | | 30 | | 528.3 | 167.5 |
| | | | | | | 40 | Deionis ed | 345.0 | 12.5 |
| | | | | | | 30 | | 360.0 | 52.4 |

### *Prenton water is hard water.

Not only does the dissolution improve but it does so in such a way that that a capsule made from the film dissolves in a safe time - dissolving quickly in the wash but remaining undissolved whilst it is handled by a consumer (about 30 seconds) as they put in in the washing machine.

### EXAMPLE CAPSULE - LAUNDRY TREATMENT COMPOSITION

The water soluble capsules comprise laundry treatment compositions dispensed to each of the three compartments is as follows:

| ***Compartment #1*** | ***Compartment #2*** | ***Side compartment #2*** |
|---|---|---|
| Surfactant | Surfactants | Surfactants |
| Polymer cleaning | Polymer cleaning | Polymer cleaning |
| Sequestrant | Sequestrant | Sequestrant |
| Water | Enzyme -cellulase | Enzyme - protease |
| Hydroptrope | Fluorescer | Water 8%wt. |
| Opacifier | Water 8%wt | Hydrotrope |
| | Hydrotrope | Dyes |
| | Dyes | |
| | Perfume | |

The unit dosed products comprise water soluble film printed on the inside.

Further example formulations of unit dose products are provided below.

| **DESCRIPTION** | **1** | **2** |
|---|---|---|
| | | |

| **Raw Material** | **Inclusion level as 100%** | **Inclusion level as 100%** |
|---|---|---|
| **SURFACTANT** | | |
| LAS/SLES/NI ratio | 58/30/12 | 47/0/53 |
| LAS acid | 25.20 | 21.22 |
| SLES 3EO | 13.00 | |
| MIPA-LES 2EO | | |
| Non Ionic 7EO | 5.60 | 23.50 |
| Fatty acid / Oleic acid | 6.60 | 8.64 |

| **HYDROTOPE** | | |
|---|---|---|
| Glycerol | 7.70 | 13.10 |
| Mono Propyl Glycerol | 12.80 | 8.30 |
| **NEUTRALIZER/BUFFER** | | |
| MEA | 10.50 | 6.50 |
| **WHITENESS AGENT** | | |
| CBS-CL | 0.39 | 0.40 |

| **SALTS & SEQUESTRANTS & BUILDERS** | | |
|---|---|---|
| Dequest 2010 | 2.90 | |
| Dequest 2066 | | 0.65 |
| Citric Acid | 0.70 | |

| **Enzymes** | | |
|---|---|---|
| Mannanase (% as Mannaway 4L) | 1.00 | 1.00 |
| Cellulase (% as Celluclean4500T) | 1.00 | 1.00 |
| Protease (% as Savinase ultra 16L) | 1.00 | 1.00 |
| Amylase (% as Stainzyme 12L) | 1.00 | 1.00 |

The unit dosed products comprise water soluble film.

## Claims

1. A water-soluble film comprising carrageenan and a bittering agent and a plasticiser present at a level from 1 - 99%wt, %wt based on total weight of dry film.

2. A water-soluble film according to claim 1 wherein the bittering agent comprises benzoic benzylamine amide, denatonium benzoate, denatonium saccharide, trichloroanisole, methyl anthranilate and quinine (and salts of quinine).

3. A water-soluble film according to any preceding claim wherein the bittering agent comprises denatonium benzoate.

4. A water-soluble film according to any preceding claim wherein the bittering agent comprises a capsaicinoid.

5. A water-soluble film according to any preceding claim wherein the bittering agent comprises capsaicin.

6. A water-soluble film according to any preceding claim comprising at least one plasticiser preferably polyol, a poly glycerol or a poly alcohol or mixtures thereof.

7. A water-soluble film according to any preceding claim wherein the film excludes chitosan and furecellan.

8. A water-soluble film according to any preceding claim, in which non-lambda forms of carrageenan are present at less that 30%wt (%wt based on total amount of carrageenan present in the film).

9. A water-soluble film according to any preceding claim comprising greater than 20%wt lambda carrageenan (wt (%wt based on total weight of cast/dry film).

10. A water-soluble film according to any preceding claim wherein the film comprises a single layer.

11. A water-soluble film according to any preceding claim wherein the film has a thickness of 40 - 150 micrometres.

12. A water-soluble capsule comprising a water-soluble film according to any preceding claim.

13. A water-soluble capsule according to claim 12 comprising at least one internal compartment enclosed by the water-soluble film, the compartment having an internal space and containing a home care composition within the internal space.

14. A water-soluble capsule according to claim 12 or 13 comprising a first film comprising one or more thermoformed recesses, said recess/es containing a home care composition and a second film superposed over said first film, said first and second films sealed around the edges, wherein said first and second films are according to any of claims 1 - 12.

15. A method of making a water-soluble capsule comprising the steps of
(i) thermoforming a first film of to provide a thermoformed recess in said first film;
(ii) filling said recess with a home care composition;
(iii) superposing a second film over said first film
(iv) sealing said first film to said second film sealed around edge regions of the films;
wherein the at least the first or second film and preferably both the first and the second film are according to any of claims 1 - 11.

## Patentansprüche

1. Wasserlöslicher Film, umfassend Carrageen und einen Bitterstoff sowie einen Weichmacher in einer Menge von 1 - 99 Gew.-%, Gew.-%, bezogen auf das Gesamtgewicht des trockenen Films.

2. Wasserlöslicher Film nach Anspruch 1, wobei der Bitterstoff Benzoesäurebenzylamin-Amid, Denatoniumbenzoat, Denatoniumsaccharid, Trichloranisol, Methylanthranilat und Chinin (und Salze von Chinin) umfasst.

3. Wasserlöslicher Film nach einem vorhergehenden Anspruch, wobei der Bitterstoff Denatoniumbenzoat umfasst.

4. Wasserlöslicher Film nach einem vorhergehenden Anspruch, wobei der Bitterstoff ein Capsaicinoid umfasst.

5. Wasserlöslicher Film nach einem vorhergehenden Anspruch, wobei der Bitterstoff Capsaicin umfasst.

6. Wasserlöslicher Film nach einem vorhergehenden Anspruch, umfassend mindestens einen Weichmacher, bevorzugt Polyol, ein Polyglycerin oder einen Polyalkohol oder Mischungen davon.

7. Wasserlöslicher Film nach einem vorhergehenden Anspruch, wobei der Film kein Chitosan und kein Furecellan enthält.

8. Wasserlöslicher Film nach einem vorhergehenden Anspruch, in dem Nicht-Lambda-Formen des Carrageens in weniger als 30 Gew.-% (Gew.-%, bezogen auf die Gesamtmenge des in dem Film vorliegenden Carrageens) vorhanden sind.

9. Wasserlöslicher Film nach einem vorhergehenden Anspruch, umfassend mehr als 20 Gew.-% Lambda-Carrageen (Gew.-%, bezogen auf das Gesamtgewicht des gegossenen/trockenen Films).

10. Wasserlöslicher Film nach einem vorhergehenden Anspruch, wobei der Film eine einzige Schicht umfasst.

11. Wasserlöslicher Film nach einem vorhergehenden Anspruch, wobei der Film eine Dicke von 40 - 150 Mikrometern aufweist.

12. Wasserlösliche Kapsel, umfassend einen wasserlöslichen Film nach einem vorhergehenden Anspruch.

13. Wasserlösliche Kapsel nach Anspruch 12, umfassend mindestens ein inneres Fach, das von dem wasserlöslichen Film umschlossen ist, wobei das Fach einen Innenraum aufweist und der Innenraum eine Zusammensetzung für die häusliche Pflege enthält.

14. Wasserlösliche Kapsel nach Anspruch 12 oder 13, umfassend einen ersten Film, der eine oder mehrere thermogeformte Vertiefungen aufweist, wobei die Vertiefung/en eine Zusammensetzung für die häusliche Pflege enthält/enthalten, und einen zweiten Film, der den ersten Film überlagert, wobei der erste und der zweite Film an den Rändern versiegelt sind, wobei der erste und der zweite Film einem der Ansprüche 1 - 12 entsprechen.

15. Verfahren zur Herstellung einer wasserlöslichen Kapsel, umfassend die Schritte
(i) Thermoformen eines ersten Films, um eine thermogeformte Vertiefung in dem ersten Film bereitzustellen;
(ii) Ausfüllen der Vertiefung mit einer Zusammensetzung für die häusliche Pflege;
(iii) Aufbringen eines zweiten Films auf den ersten Film;
(iv) Versiegeln des ersten Films mit dem zweiten Film, wobei die Versiegelung an den Randbereichen der Filme erfolgt;
wobei mindestens der erste oder der zweite Film und bevorzugt sowohl der erste als auch der zweite Film einem der Ansprüche 1 - 11 entsprechen.

## Revendications

1. Film hydrosoluble comprenant du carraghénane et un agent amérisant et un plastifiant présent à un niveau de 1 à 99 % en poids, % en poids sur la base du poids total de film sec.

2. Film hydrosoluble selon la revendication 1, dans lequel l'agent amérisant comprend de l'amide de benzylamine benzoïque, du benzoate de dénatonium, du saccharide de dénatonium, du trichloroanisole, de l'anthranilate de méthyle et de la quinine (et des sels de quinine).

3. Film hydrosoluble selon l'une quelconque des revendications précédentes, dans lequel l'agent amérisant comprend du benzoate de dénatonium.

4. Film hydrosoluble selon l'une quelconque des revendications précédentes, dans lequel l'agent amérisant comprend un capsaïcinoïde.

5. Film hydrosoluble selon l'une quelconque des revendications précédentes, dans lequel l'agent amérisant comprend de la capsaïcine.

6. Film hydrosoluble selon l'une quelconque des revendications précédentes, comprenant au moins un plastifiant, de préférence un polyol, un polyglycérol ou un polyalcool ou des mélanges de ceux-ci.

7. Film hydrosoluble selon l'une quelconque des revendications précédentes, dans lequel le film exclut le chitosane et le furecellane.

8. Film hydrosoluble selon l'une quelconque des revendications précédentes, dans lequel les formes non lambda de carraghénane sont présentes à moins de 30 % en poids (% en poids sur la base de la quantité totale de carraghénane présente dans le film).

9. Film hydrosoluble selon l'une quelconque des revendications précédentes comprenant plus de 20 % en poids de carraghénane lambda (% en poids sur la base du poids total de film sec/coulé).

10. Film hydrosoluble selon l'une quelconque des revendications précédentes, dans lequel le film comprend une seule couche.

11. Film hydrosoluble selon l'une quelconque des revendications précédentes, dans lequel le film a une épaisseur de 40 à 150 micromètres.

12. Capsule hydrosoluble comprenant un film hydrosoluble selon l'une quelconque des revendications précédentes.

13. Capsule hydrosoluble selon la revendication 12 comprenant au moins un compartiment interne entouré par le film hydrosoluble, le compartiment ayant un espace interne et contenant une composition d'entretien ménager dans l'espace interne.

14. Capsule hydrosoluble selon la revendication 12 ou 13 comprenant un premier film comprenant un ou plusieurs évidements thermoformés, ledit ou lesdits évidements contenant une composition d'entretien ménager et un deuxième film superposé audit premier film, lesdits premier et deuxième film scellés autour des bords, dans laquelle lesdits premier et deuxième films sont selon l'une quelconque des revendications 1 à 12.

15. Procédé de production d'une capsule hydrosoluble comprenant les étapes de
(i) thermoformage d'un premier film pour fournir un évidement thermoformé dans ledit premier film ;
(ii) remplissage dudit évidement avec une composition d'entretien ménager;
(iii) superposition d'un deuxième film audit premier film
(iv) scellement dudit premier film audit deuxième film scellé autour des régions de bord des films;
dans lequel le au moins le premier ou deuxième film et de préférence à la fois le premier et le deuxième film sont selon l'une quelconque des revendications 1 à 11.
